# EUROPEAN PATENT APPLICATION

(11) **EP 2 400 448 A1**
(43) Date of publication of application: **28.12.2011**
(21) Application number: 11170914.3
(22) Date of filing: 22.06.2011
(51) Int. Cl.: G06Q 10/00

(54) **System and method for real time inspection information recording and reporting**

(30) Priority: 23.06.2010 US 821639
(71) Applicant: Phoenix Quality Inspection Inc., Oshawa, ON L1J 8P7 (CA)
(72) Inventor: Phoenix Quality Inspection Inc., Oshawa, ON L1J 8P7 (CA)
(74) Representative: Patel, Binesh

(57) **Abstract**

A method and system for delivery and display of a completed inspection report to a recipient listed in a recipient list, the recipient associated with a recipient address, the recipient list associated with a respective inspection template, the respective one inspection template selectable from a plurality of inspection templates accessible at the computing device. The method comprises invoking, for display at a user interface display screen of the computing device, a current inspection template, the current inspection template including a plurality of data fields reflecting a current status of an inspection job; populating at least one data field of the plurality of data fields of the current inspection template to create a completed inspection report; encapsulating the completed inspection report into a message, the message configured according to a pre-specified message communication format; and dispatching the message to the at least one recipient address of the recipient list.

## Description

### FIELD

The present disclosure relates generally to a computerized system and method for real time recording and reporting of inspection information.

### BACKGROUND

With the proliferation of internet-connected computing devices and software programs to view, manipulate and manage information presented via a graphical user interface, there has been an increased desire to provide a user with timely and more intuitive presentation of information. For instance, with regard to quality inspection services for manufacturing operations, it would be advantageous to provide solutions which enhance an organization's, or individual's, ability to effectively present current status and to respond in the most timely manner to undesirable variations in the manufacturing operations.

### SUMMARY OF THE INVENTION

Provided is a computer implemented method, executed in a processor of a computing device, for delivery and display of a completed inspection report to a recipient listed in a recipient list, the recipient associated with a recipient address, the recipient list associated with a respective inspection template, the respective inspection template selectable from a plurality of inspection templates accessible at the computing device. The method comprises invoking, for display at a user interface display screen of the computing device, a current inspection template, the current inspection template including a plurality of data fields reflecting a current status of an inspection job; populating at least one data field of the plurality of data fields of the current inspection template to create a completed inspection report; encapsulating the completed inspection report into a message, the message configured according to a pre-specified message communication format; and dispatching the message to the at least one recipient address of the recipient list.

In an embodiment, the method may further comprise displaying, prior to the dispatching, the message and the recipient list at the user interface display screen.

In another embodiment, the message communication format is pre-specified as at least one of an audible alarm and a visual alarm.

In an alternate embodiment, the message communication format is pre-specified based on the recipient address.

In yet another variation, the recipient address consists of an address selected from the group consisting of: an e-mail address; an SMS address; a telephone number; a postal mailing address.

The message, in another embodiment, further includes a pictorial depiction associated with the current status of the inspection job.

Yet further, the message may further include location information associated with the current status of the inspection job.

In another embodiment, the message further includes historical trend information associated with the current status of the inspection job.

Further provided is a computing device for delivery and display of a completed inspection report to a recipient listed in a recipient list, the recipient associated with a recipient address, the recipient list associated with a respective inspection template, the respective inspection template selectable from a plurality of inspection templates accessible at the computing device for display at a user interface display screen of the computing device. The computing device comprises a processor; a user interface display screen coupled to the processor; a memory coupled to the processor and the user interface display screen, the memory comprising instructions which, when executed in the processor, provide a template module configured to invoke, for display at the user interface display screen of the computing device, a current inspection template, the current inspection template including a plurality of data fields reflecting a current status of an inspection job and further configured for populating at least one data field of the plurality of data fields to create a completed inspection report; an encapsulation module to encapsulate the completed inspection report into a message, the message configured according to a pre-specified message communication format; and a dispatch module configured to dispatch the message to the at least one recipient address of the recipient list.

In one embodiment, the computing device comprises a wireless tablet computing device.

In another embodiment, the dispatch module displays, prior to the dispatching, the message and the recipient list at the user interface display screen.

In yet another embodiment, the dispatch module is configured to receive a modification to at least one of the recipient list and the recipient address prior to the dispatching.

In a further variation, the encapsulation module encapsulates the message in a message format selected from the formats consisting of: an email format, a simple message service (SMS) format and a telephone number format.

In another embodiment, the template module may be further configured to populate the current inspection template with location information associated with the current status of the inspection job.

### BRIEF DESCRIPTION OF THE DRAWINGS

Embodiments are illustrated by way of example only and not limitation, with reference to the following drawings in which like reference numerals indicate corresponding or similar elements, and in which:

Figure 1 is a diagram illustrating an exemplary communication network within which a mobile computing device captures inspection information, for optionally reporting in real-time to any other device coupled within the communication network, in accordance with one embodiment;

Figure 2 is a block diagram illustrating an exemplary electronic architecture of the computing device of Figure 1;

Figure 3 is an exemplary diagram of a user interface display screen depicting a current inspection template in one embodiment;

Figure 4 illustrates an exemplary process flow among components of the system of Figure 1 for capturing inspection information and delivering and displaying messages and reports to other devices within the communication network; and

Figure 5 depicts another variation of the process flow among components of the system of Figure 1 for capturing inspection information and delivering and displaying messages and reports to other devices within the communication network.

### DETAILED DESCRIPTION

Accordingly, in carrying out inspection tasks or jobs, there is a need for interactive software that can capture and report inspection data in real time. Data as used herein includes not only numerical data, but all other associated information of the current inspection job, such as pictures of defects, recordation of handwriting instructions, contact report, down time logs, work instructions, historical quality summaries plus training logs and audits logs. Advantageously, all data and information may be instantly sent and reported to recipients communicatively connected anywhere within a cell phone or a wide area network, including the internet. The user experience, and indeed the business case for such a solution, will be much enhanced and more positive to the extent that such capability is provided in real-time, thereby allowing for timely corrective actions.

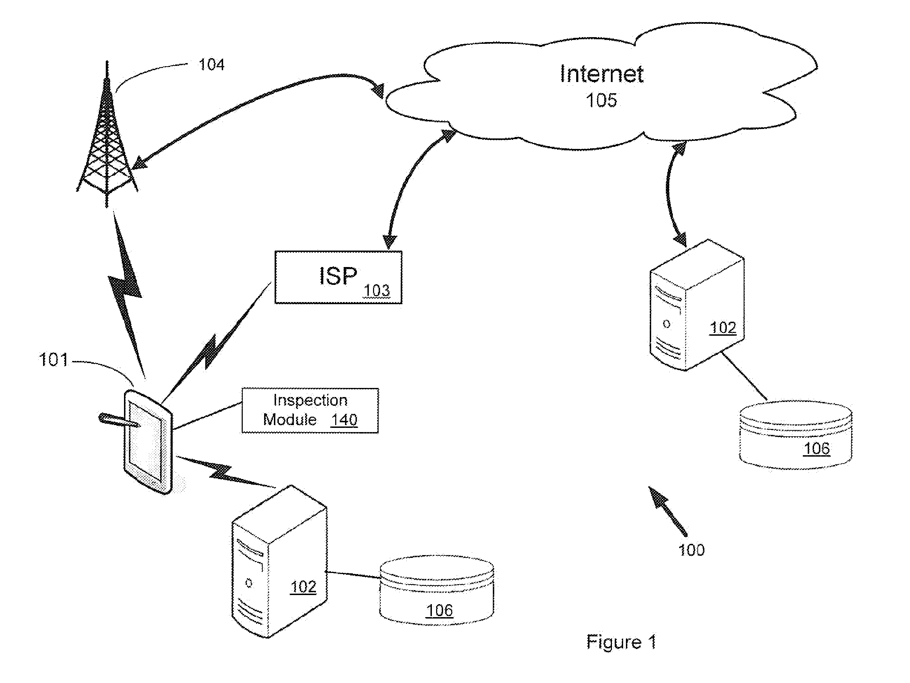

Referring to Figure 1, a communication system is illustrated generally by numeral 100. The communication system 100 may comprise a plurality of computing devices 101, a base station or antenna 104, a communication network 105 such as the internet, a quality services server 102 having access to quality services database 106, and internet services provider 103 providing an alternate communicative path to internet 105 for computing device 101.

Quality services server 102 in conjunction with quality services database 106 may serve as a repository and computation engine for historical and current information related to inspection jobs associated with, for example, a manufacturing operation at a manufacturing plant or any other location. The computation function may be related to calculating, such as via statistical trend analyses, and presenting quality information, in any number of formats such as via charts, based on the accumulated quality data acquired.

It will be understood by a person skilled in the art that the communication system 100 of Figure 1 has been illustrated with a number of pertinent components for exemplary purposes only. Accordingly, a plurality of computing devices 101, base stations 104, communication networks 105, quality services computer servers 102, and related quality services databases 106 may be envisaged as needed.

The computing devices 101 are in communication with computer quality services server 102 via a local, direct connection, or via the wide-area communication network 105 and the base station 104. Accordingly, the communication network 105 may include several components such as a wireless network, a relay, a corporate server 110 and/or a mobile data server (MDS) for relaying data.

Communication system 100 is configured to deliver and display messages from, and to, to computing device 101. Inspection module 140 of computing device 101 may be part of the operating system of computing device 101, or a separate software application installed in memory, implemented in software and/or firmware instructions. It is also contemplated that at least some, or all, of the repository and computation functions described above at quality services server 102 and quality services database 106 may be fulfilled directly at computing device 101 via inspection module 140.

It will be appreciated by a person of ordinary skill in the art that the communication system 100 described herein is exemplary and that changes may be made to one or more components to accommodate different network configurations without affecting the scope of the disclosure herein. Further, although the present description may specifically recite a computing device 101, it will be appreciated that other types of devices, including both wired and wireless devices, may be employed.

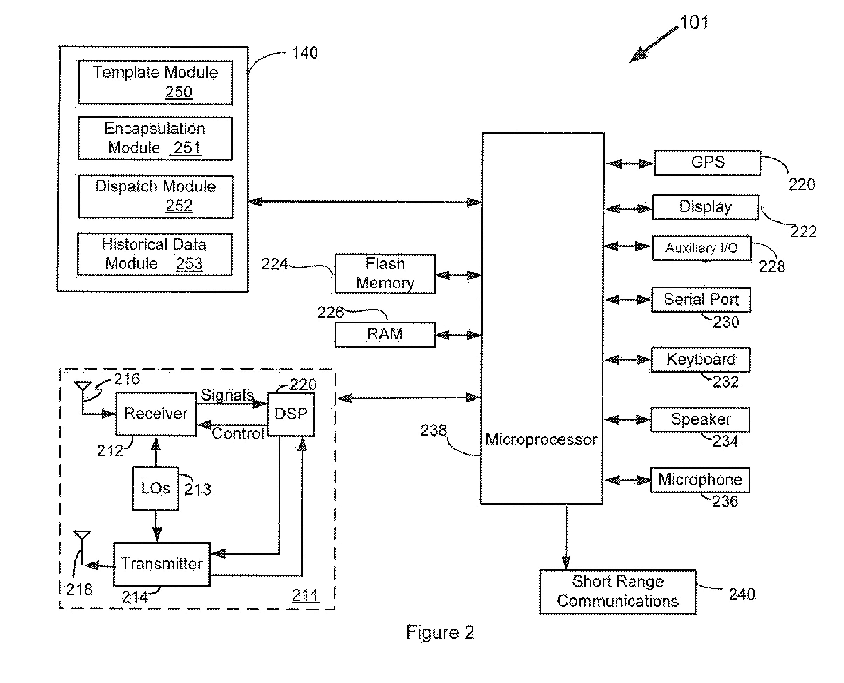

Referring to Figure 2, components of the computing device 101 are illustrated in greater detail. The computing device 101 may be a tablet computer, a pad-type computer, a laptop computer, a desktop computer, a handheld computer or other data computing device.

The computing device 101 includes a microprocessor 238 which controls general operation of the computing device 101. The microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240 such as Bluetooth (BLUETOOTH^{TM}) for example, as well as a radio frequency (RF) wireless communication subsystem 211. As will be apparent to those skilled in field of communications, the particular design of the RF communication subsystem 211 depends on the specific communication network in which computing device 101 is intended to operate, but may include communication functionalities such as radio-frequency identification (RFID), Wi-Fi WLAN based on IEEE 802.11 standards, Zigbee, Z-wave and the like.

The computing device 101 may also include a positioning device 244, such as a GPS receiver for example, for receiving and capturing positioning information, as well as a bar code scanner having RFID capability.

Operating system software used by the microprocessor 238 may be stored in a persistent store of memory such as the flash memory 224, which may alternatively be a read-only memory (ROM) or other similar storage element (not shown). Those skilled in the art will appreciate that the operating system, specific device applications, or parts thereof, may be temporarily loaded into a volatile store of memory such as RAM 226.

The microprocessor 238, in addition to its operating system functions, typically enables execution of software applications on the computing device 101. A predetermined set of applications, which control basic device operations, may be installed on the computing device 101 during its manufacture. Applications may also be loaded onto the computing device 101 through an auxiliary I/O subsystem 228 or serial port 230 and installed by a user in RAM 226, or the in flash memory-type persistent store 224, for execution by the microprocessor 238. Such flexibility in application installation increases the functionality of the computing device 101 and may provide enhanced on-device features.

The display screen 222 is used to visually present an application's graphical user interface (GUI) to the user. The user can manipulate application data by modifying information on the GUI using an input device such as the keyboard 232 for example. Depending on the type of computing device 101, the user may be provided with other types of input devices, such as, for example, a scroll wheel, trackball, or light pen.

The display screen 222 of computing device 101 may also be configured as a touch input interface by incorporating touch-sensing means based on sensing technologies into display screen 222, with processor 238 of computing device 101 configured to recognize and resolve touch screen user inputs. The user can manipulate data displayed by modifying information on the GUI using direct touches by finger or stylus. The sensing technologies may be capacitive sensing, resistive sensing, surface acoustic wave sensing, pressure sensing, optical sensing, and the like. The touch sensing means may also comprise multipoint touch sensing means, capable of distinguishing multiple touches that occur at the same time.

The touch screen user interface 222 functions both to visually present information via graphical user interface (GUI) to the user and as an input mechanism to manipulate information presented at the GUI. Thus touch screen user interface 222 may be interchangeably referred to herein as touch screen display 222, since it is inherently capable of performing both a screen display and a user input function.

The microprocessor 238, in addition to its operating system functions, typically enables execution of software applications on the computing device 101. A predetermined set of applications, which control basic device operations, is installed on the computing device 101 during its manufacture. These basic operations typically include data and voice communication applications, such as calendar and address book applications, for example. Additionally, applications may also be loaded onto the computing device 101 through the network 106, an auxiliary I/O subsystem 228, serial port 230, short-range communications subsystem 240, or any other suitable subsystem 242, and installed by a user in RAM 226, or the persistent store 224, for execution by the microprocessor 238. Such flexibility in application installation increases the functionality of the computing device 101 and may provide enhanced on-device features, communication-related features, or both.

Still with reference to Figure 2, inspection module 140 of computing device 101 may comprise template module 250, encapsulation module 251, dispatch module 252 and historical data module 153. While these modules are depicted as being located, or performed, at computing device 101, it is also contemplated that any combination, or even all, of template module 250, encapsulation module 251, dispatch module 252 and historical data module 153 may be alternately, but accessibly, located at quality services server 102 and quality services data 106.

Template module 250 provides a plurality of inspection templates for various inspection jobs which may be performed via a user interface display screen 222 of computing device 101. Depending on the current inspection job at hand, an inspection template appropriate to that job, or a current inspection template, may be invoked from among a plurality of inspection templates accessible at computing device 101, for display at user interface display screen 222. An inspector may then proceed to enter data into data fields of the current inspection template, creating a completed inspection report, depending on the progress and status of the inspection operation.

In one embodiment, the template module may be further configured to populate a data field of the current inspection template with location information associated with the current status of the inspection job. The location information may be entered manually after independent determination, but may also be entered automatically based on Global Position System (GPS) receiver functionality integrated into computing device 101. In situations involving inspections at remote locations, such as a defective oil pipeline in an undefined wilderness location, it would be advantageous to record a GPS-determined location linked to a report providing further details of the defect being inspected.

Encapsulation module 251 may comprise any combination of software and hardware for encapsulating the completed inspection report into an appropriate message format. The message format may be pre-specified based on the capabilities and preference of the communication platform being used, such as instant e-mail or simple messaging service (SMS). The message may also be formatted for sending via a phone call. In other embodiments, it is contemplated that the message be formatted for presenting at the recipient's device in a non-obtrusive manner, such as via a visible alarm involving flashing status indicator lights. Yet still, it may be desired to present the message in a more attention-getting, obtrusive manner such as an audible alarm.

Dispatch module 252 may comprise any combination of software and hardware for dispatching the message to a respective address associated with recipients of a predetermined recipient list. The recipients may be any party with a stake, economic or otherwise, in the performance and results of the inspection operation, such as managers of the manufacturing operations, or suppliers of parts used for product assembly in a manufacturing operation at a customer's plant.

Historical data module 153 may comprise any combination of software and hardware for appropriate computation and presentation of data related to the inspection jobs, including statistical computations based on accumulated historical quality data. An example of such may be trend analyses of quality performance over any selected period of time, for a given supplier or a given supplier's parts, shown with regard to control limits indicating whether processes might be under statistical control or out of statistical control.

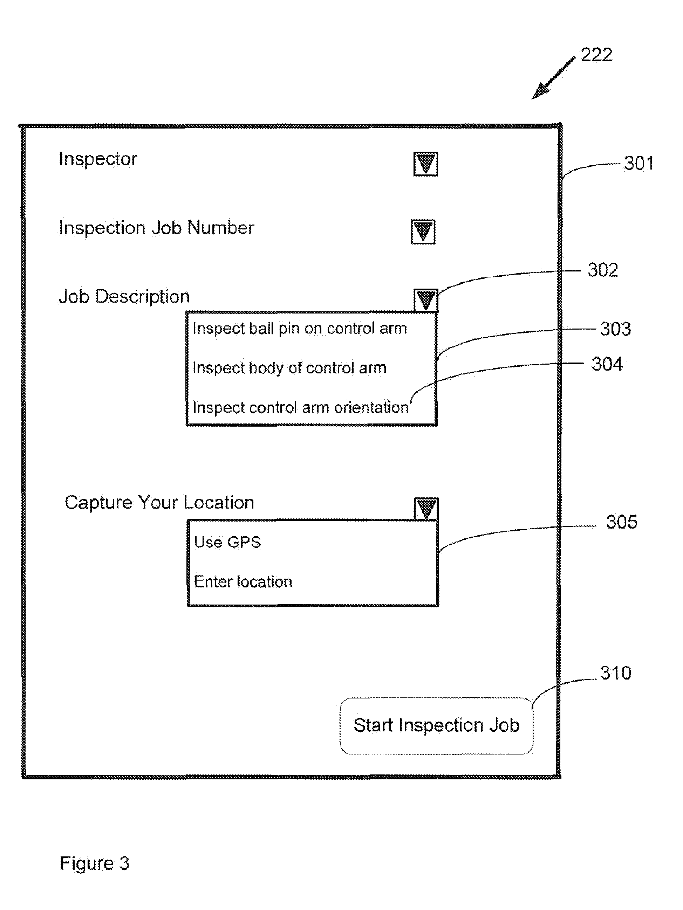

Figure 3 is an illustrative diagram of a user interface display screen 222 depicting more detail of an exemplary current inspection template 301. Drop-down menu selector 302 provides the inspection operator with a convenient way to populate the data fields of current inspection template 301 with drop-down selections 303, such as with the specific choice "Inspect control arm orientation" 304.

Optionally, before invoking or selecting "Start Inspection Job" 310, the inspection operator may choose to capture a given location to be associated with the current inspection job, for example to be determined using an integrated GPS receiver, such as via "Use GPS" 305, of computing device 101.

While particular data or drop-down menu selection commands are depicted in Figure 3, those skilled in the art will understand that many other arrangements of data and information may be utilized in a given inspection template, as appropriate for a given inspection job. For example, prior to starting an inspection job, it may be appropriate to identify or specify recipients of the recipient list, along with their respective addresses, to identify applicable defect codes and defect categories, reasons for rejecting as defective, part numbers being inspected, current job shift, applicable work instructions, date codes, and the like.

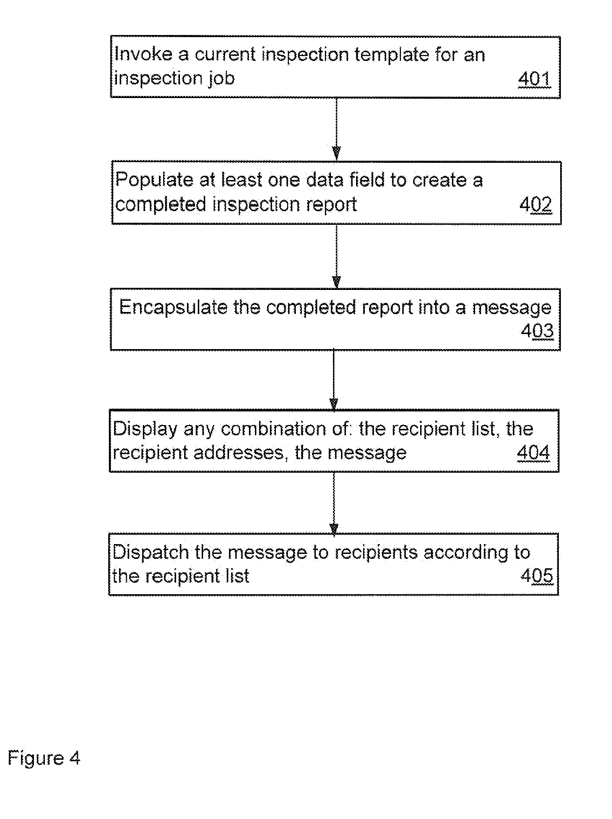

Figure 4 illustrates an exemplary process flow among components of the system of Figure 1 for delivering and displaying messages from computing device 101. At step 401, a current inspection template 301 may be invoked from at user interface display screen 222 from among a plurality of inspection templates accessible at computing device 101.

At step 402, data fields of the current inspection template may be populated with information from the current inspection job. At step 403, once the inspection report is completed based on the populated fields, the completed report may be encapsulated into an appropriate format for transmitting to recipients.

Optionally, before the inspection report is deemed completed, pictures of the defect(s) associated with the current inspection job may be taken using a digitizer or camera integrated into computing device 101, for submission as part of the completed report via the message. Such pictures, or additional, associated data files, may be integrated (or partly integrated) into the completed report, or sent as attachments of the message.

In one embodiment, creating the completed inspection report may further comprise receiving at the user interface display screen, upon populating the at least one data field, a further input from the user/inspector indicating that the report is completed.

At step 404, the recipient list, the recipient addresses, and even the message may be displayed, providing an opportunity for confirmation by the user, before the message is dispatched.

At step 405, the message is dispatched to the recipients according to the addresses provided in the recipient list or lists.

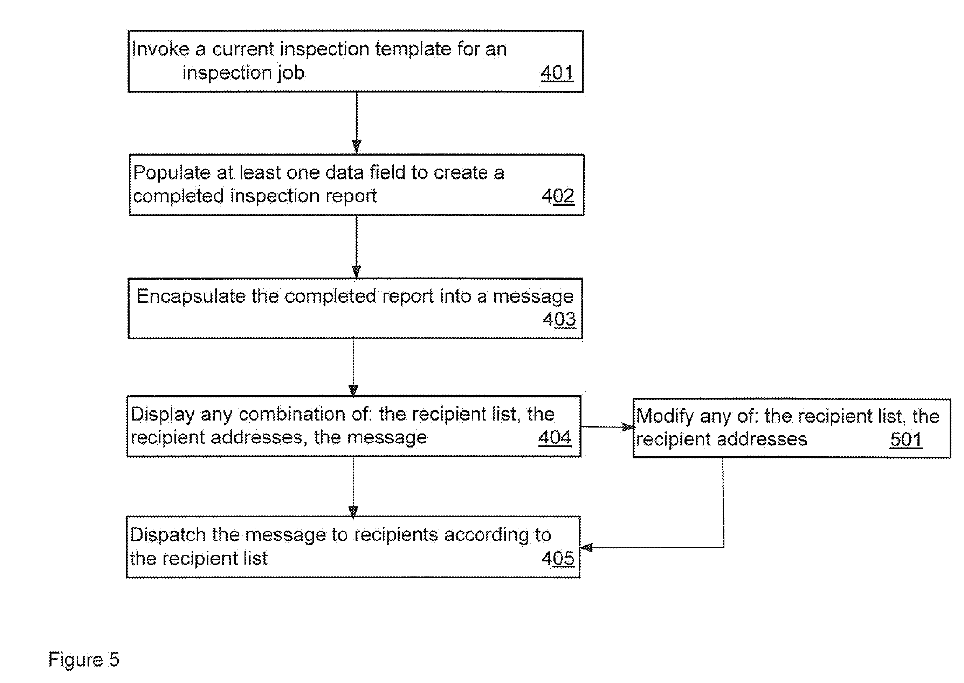

Figure 5 depicts yet another variation of the process flow among components of the system of Figure 1 for delivering and displaying messages to computing device 101, that takes into account conditions associated with the advertiser that broadcasts the ad. At step 501, the user may be optionally provided with an opportunity to modify the recipient list and/ or the recipient addresses, either by correction, additions or deletions applied thereto, before dispatching the message.

Although various embodiments have been described in the disclosure herein, it will be understood by those skilled in the art that further variations may be made without departing from the scope of the appended claims.

## Claims

1. A computer implemented method, executed in a processor of a computing device, for delivery and display of a completed inspection report to at least one recipient listed in a recipient list, the at least one recipient associated with a recipient address, the recipient list associated with a respective one inspection template, the respective one inspection template selectable from a plurality of inspection templates accessible at the computing device, the method comprising:
invoking, for display at a user interface display screen of the computing device, a current inspection template, the current inspection template including a plurality of data fields reflecting a current status of an inspection job;
populating at least one data field of the plurality of data fields of the current inspection template to create a completed inspection report;
encapsulating the completed inspection report into a message, the message configured according to a pre-specified message communication format; and
dispatching the message to the at least one recipient address of the recipient list.

2. The method of claim 1 further comprising:
displaying, prior to the dispatching, the message and the recipient list at the user interface display screen.

3. The method of any one of claims 1 or 2 wherein the message communication format is pre-specified as at least one of an audible alarm and a visual alarm.

4. The method of any one of claims 1 to 3 wherein the message communication format is pre-specified based on the recipient address.

5. The method of any one of claims 1 to 4 wherein the recipient address consists of an address selected from the group consisting of: an e-mail address; an SMS address; a telephone number; a postal mailing address.

6. The method of any one of claims 1 to 5 wherein the message further includes any one or more of:
a pictorial depiction associated with the current status of the inspection job;
location information associated with the current status of the inspection job; or
historical trend information associated with the current status of the inspection job.

7. A computer program product storing instructions and data to configure a processor to perform the method of any of claims 1 to 6.

8. A computing device for delivery and display of a completed inspection report to at least one recipient listed in a recipient list, the at least one recipient associated with a recipient address, the recipient list associated with a respective one inspection template, the respective one inspection template selectable from a plurality of inspection templates accessible at the computing device for display at a user interface display screen of the computing device, the computing device comprising:
a processor and a memory coupled thereto, the memory storing instructions and data configuring the processor to perform the method according to any of claims 1 to 6.

9. The computing device of claim 8 comprising a wireless tablet computing device.

10. A computing device for delivery and display of a completed inspection report to at least one recipient listed in a recipient list, the at least one recipient associated with a recipient address, the recipient list associated with a respective one inspection template, the respective one inspection template selectable from a plurality of inspection templates accessible at the computing device for display at a user interface display screen of the computing device, the computing device comprising:
a processor;
a user interface display screen coupled to the processor;
a memory coupled to the processor and the user interface display screen, the memory comprising instructions which, when executed in the processor, provide:
a template module configured to invoke, for display at the user interface display screen of the computing device, a current inspection template, the current inspection template including a plurality of data fields reflecting a current status of an inspection job and further configured for populating at least one data field of the plurality of data fields to create a completed inspection report;
an encapsulation module to encapsulate the completed inspection report into a message, the message configured according to a pre-specified message communication format; and
a dispatch module configured to dispatch the message to the at least one recipient address of the recipient list.

11. The computing device of claim 10 comprising a wireless tablet computing device.

12. The computing device of any one of claims 10 or 11 wherein the dispatch module displays, prior to the dispatching, the message and the recipient list at the user interface display screen.

13. The computing device of any one of claims 10 to 12 wherein the dispatch module is configured to receive a modification to at least one of the recipient list and the recipient address prior to the dispatching.

14. The computing device of any one of claims 10 to 13 wherein the encapsulation module encapsulates the message in a message format selected from the formats consisting of: an email format, a simple message service (SMS) format and a telephone number format.

15. The computing device of any one of claims 10 to 14 wherein the template module is further configured to populate the current inspection template with location information associated with the current status of the inspection job.
